(19) Europäisches Patentamt

European Patent Office

Office européen des brevets

(11) Veröffentlichungsnummer : **0 421 394 B1**

## (12) EUROPÄISCHE PATENTSCHRIFT

(45) Veröffentlichungstag der Patentschrift :
**05.04.95 Patentblatt 95/14**

(51) Int. Cl.⁶ : **G11B 23/50**, G11B 19/20, G01L 13/06

(21) Anmeldenummer : **90118994.4**

(22) Anmeldetag : **04.10.90**

(54) **Differenzdruckmessgerät.**

(30) Priorität : **06.10.89 DE 3933512**

(43) Veröffentlichungstag der Anmeldung :
**10.04.91 Patentblatt 91/15**

(45) Bekanntmachung des Hinweises auf die
Patenterteilung :
**05.04.95 Patentblatt 95/14**

(84) Benannte Vertragsstaaten :
**CH DE FR GB IT LI**

(56) Entgegenhaltungen :
**WO-A-82/01250
WO-A-85/04474
DE-A- 3 321 580
DE-A- 3 827 138
DE-B- 1 948 191
DE-C- 3 504 329
K.W. Bonfig "Technische Druck- und Kraftmessung" Expert Verlag (DE) 1988, Seite 106
H. Julien "Druckmittler" Oldenbourg Verlag
(DE) 1990, Seiten 11, 12**

(73) Patentinhaber : **Endress u. Hauser GmbH u.
Co.
Hauptstrasse 1
D-79689 Maulburg (DE)**

(72) Erfinder : **Banholzer, Karlheinz
Fuchsackerweg 6
W-7860 Schopfheim (DE)**
Erfinder : **Gerst, Peter
Albert-Braun-Strasse 11a
W-7500 Karlsruhe (DE)**
Erfinder : **Jung, Peter
Hermann-Barte-Strasse 40
W-7853 Steinen (DE)**

(74) Vertreter : **Leiser, Gottfried, Dipl.-Ing. et al
Prinz & Partner,
Manzingerweg 7
D-81241 München (DE)**

# EP 0 421 394 B1

## Beschreibung

Die Erfindung betrifft ein Differenzdruckmeßgerät mit einem Einkammer-Differenzdrucksensor, der zwei elastische Sensor-Membranen enthält, die ein mit einer Flüssigkeit gefülltes Volumen abschließen, und in dem zwei Meßkondensatoren gebildet sind, deren Kapazitäten sich in Abhängigkeit von dem Sensor-Differenzdruck, der zwischen den auf die beiden Sensor-Membranen einwirkenden Drücken besteht, gegensinnig ändern, und mit einer Auswerteschaltung, welche den Sensor-Differenzdruck aus den Kapazitäten der Meßkondensatoren berechnet und eine erste Kompensationsanordnung enthält, welche Einflüsse der Sensor-Temperatur und von Sensor-Parametern auf den berechneten Sensor-Differenzdruck kompensiert, wobei der Einkammer-Differenzdrucksensor mit wenigstens einer Vorlage verbunden ist, die ein von der Außenseite einer der beiden Sensor-Membranen und von der Innenseite einer Vorlagen-Membran begrenztes Volumen enthält, das mit einer Flüssigkeit gefüllt ist, über die der unmittelbar auf die Außenseite der Vorlagen-Membran einwirkende Druck auf die zugehörige Sensor-Membran übertragen wird.

Ein Differenzdruckmeßgerät mit einem Einkammer-Differenzdrucksensor und einer Kompensationsanordnung der vorstehend angegebenen Art ist aus der DE-C2-35 04 329 bekannt. Bei diesem bekannten Differenzdruckmeßgerät wird die Tatsache ausgenutzt, daß der Sensor-Differenzdruck näherungsweise der Differenz und die Sensor-Temperatur näherungsweise der Summe der reziproken Kapazitätswerte der beiden Meßkondensatoren proportional ist. In dieser Patentschrift sind auch die Beziehungen angegeben, die zwischen den Kapazitätswerten, den Sensor-Parametern und dem Sensor-Differenzdruck bzw. der Sensor-Temperatur bestehen. Die Sensor-Parameter, die beispielsweise die Nullpunktverschiebung aufgrund von Fertigungstoleranzen, die Temperaturabhängigkeit verschiedener Größen, die Empfindlichkeit des Sensors usw. betreffen, werden meßtechnisch ermittelt und gespeichert. Die Kompensationsanordnung korrigiert den berechneten Sensor-Differenzdruck mit Hilfe der gespeicherten Parameter sowie mit Hilfe der ermittelten Sensor-Temperatur, die ihrerseits mit Hilfe des berechneten Sensor-Differenzdrucks korrigiert wird, bis schließlich ein von Einflüssen der Sensor-Temperatur und der Sensor-Parameter unabhängiges Meßergebnis für den Sensor-Differenzdruck vorliegt.

Es gibt Anwendungsfälle, in denen es nicht erwünscht oder sogar unmöglich ist, einen der beiden zu vergleichenden Drücke unmittelbar auf die zugeordnete Sensor-Membran einwirken zu lassen. Dies ist beispielsweise dann der Fall, wenn das Medium, in dem der Druck herrscht, chemisch aggressiv ist oder eine so hohe Temperatur hat, daß es die Sensor-Membran zerstören würde, wenn diese mit ihm in direkten Kontakt käme. In anderen Fällen kann der Einkammer-Differenzdrucksensor nicht unmittelbar an der Druckerfassungsstelle montiert werden, weil dies die dort herrschenden Bedingungen nicht zulassen. Um in solchen Fällen die Differenzdruckmessung zu ermöglichen, ist es beispielsweise aus dem Buch "Technische Druck- und Kraftmessung" von K.W. Bonfig et al., expert verlag, Ehningen (DE), 1988, Seite 106, bekannt, den Einkammer-Differenzdrucksensor mit einer Vorlage (auch Druckmittler genannt) zu verbinden, die ein mit einer Flüssigkeit gefülltes Volumen enthält, das einerseits durch eine der beiden Sensor-Membranen und andererseits durch eine elastische Vorlagen-Membran abgeschlossen ist. Das Medium, dessen Druck verglichen werden soll, wirkt dann auf die Vorlagen-Membran ein, und der auf die Vorlagen-Membran ausgeübte Druck wird über die Flüssigkeit auf die damit gekoppelte Sensor-Membran übertragen. Im Falle eines chemisch aggressiven Mediums ist es dann möglich, die Vorlagen-Membran aus einem Material herzustellen, das von dem Medium nicht angegriffen wird. Ferner kann der Einkammer-Differenzdrucksensor an einer von der Druckerfassungsstelle entfernten günstigen Stelle montiert und über ein mit der Flüssigkeit gefülltes Rohr mit der an der Druckerfassungsstelle montierten Vorlagen-Membran gekoppelt werden. Der zu messende Differenzdruck entspricht dann der Differenz zwischen dem auf die Vorlagen-Membran einwirkenden Druck und dem Druck, der auf die der Vorlage abgewandte Sensor-Membran einwirkt. In manchen Fällen kann es auch erforderlich sein, auf jeder Seite des Einkammer-Differenzdrucksensors eine Vorlage anzuordnen.

Die Verwendung einer solchen Vorlage bei einem Differenzdruckmeßgerät der eingangs angegebenen Art würde jedoch nur dann ein richtiges Meßergebnis liefern, wenn der Druck, der auf die der Vorlage zugeordnete Sensor-Membran einwirkt, stets genau gleich dem auf die Vorlagen-Membran einwirkenden Druck wäre. Dies ist jedoch in der Regel nicht der Fall, da insbesondere durch temperaturbedingte Volumenänderungen der in der Vorlage enthaltenen Flüssigkeit ein Vorlagen-Differenzdruck entsteht, um den sich der auf die Sensor-Membran einwirkende Druck von dem auf die Vorlagen-Membran einwirkenden Druck unterscheidet. Dieser Vorlagen-Differenzdruck hängt einerseits von der Vorlagen-Temperatur ab, die oft von der Sensor-Temperatur verschieden ist, und andererseits von konstruktionsbedingten Parametern der Vorlage. Infolge dieser Einflüsse unterscheidet sich der berechnete und durch die erste Kompensationsanordnung korrigierte Sensor-Differenzdruck von dem zu messenden Differenzdruck. Daher ist auch in dem zuvor genannten Buch darauf hingewiesen, daß Unterschiede in den Temperaturen zu Meßfehlern führen, die rein physikalisch bedingt sind.

Aufgabe der Erfindung ist die Schaffung eines Differenzdruckmeßgeräts der eingangs angegebenen Art,

2

das auch bei Verwendung einer mit dem Einkammer-Differenzdrucksensor verbundenen Vorlage keine temperaturbedingten Meßfehler ergibt.

Nach der Erfindung wird diese Aufgabe dadurch gelöst, daß an der bzw. an jeder Vorlage wenigstens ein Temperatursensor zur Messung der Vorlagen-Temperatur angebracht ist, und daß in der Auswerteschaltung für die bzw. für jede Vorlage eine weitere Kompensationsanordnung vorgesehen ist, die einen Vorlagen-Differenzdruck-Rechner enthält, der den Vorlagen-Differenzdruck, welcher durch die Drücke bestimmt ist, die auf eine Vorlagenmembran und auf die zugehörige Sensor-Membran einwirken, aufgrund der Vorlagen-Temperatur und von gespeicherten Vorlagen-Parametern berechnet, sowie eine Subtrahierschaltung, welche die Differenz zwischen dem von der ersten Kompensationsanordnung korrigierten Sensor-Differenzdruck und dem berechneten Vorlagen-Differenzdruck bildet und als Meßergebnis ausgibt.

Bei dem nach der Erfindung ausgeführten Differenzdruckmeßgerät erfolgt im Anschluß an die von der ersten Kompensationsanordnung durchgeführte Kompensation des Einflusses der Sensor-Temperatur und von Sensor-Parametern eine zweite Kompensation, durch die der Einfluß der gemessenen Vorlagen-Temperatur und von gespeicherten Vorlagen-Parametern auf den berechneten Differenzdruck kompensiert wird. Obwohl die Kapazitätswerte, aus denen der Differenzdruck berechnet wird, nach wie vor nur durch den Sensor-Differenzdruck bedingt sind, wird durch die zweite Kompensation erreicht, daß der korrigierte berechnete Differenzdruck genau dem zu messenden Differenzdruck entspricht. Die Durchführung der Kompensation in zwei Stufen ergibt den Vorteil, daß die erste Kompensation unverändert die bekannte Kompensation sein kann, die für den Einkammer-Differenzdrucksensor ohne Vorlage gilt. Die für die erste Kompensation erforderlichen Sensor-Parameter können daher für den Einkammer-Differenzdrucksensor ohne Rücksicht darauf, ob er später mit einer Vorlage verwendet wird, erfaßt und abgespeichert werden. Die für die zweite Kompensation erforderlichen Parameter können je nach der Art der verwendeten Vorlage, den Einbaubedingungen usw. verschieden sein; sie können von Fall zu Fall gesondert erfaßt und abgespeichert werden.

Eine vorteilhafte Ausgestaltung der Erfindung besteht darin, daß der bzw. jeder Temperatursensor mit einer Temperaturmeßschaltung verbunden ist, die ein die Vorlagen-Temperatur darstellendes Meßsignal zu dem Vorlagen-Differenzdruck-Rechner liefert.

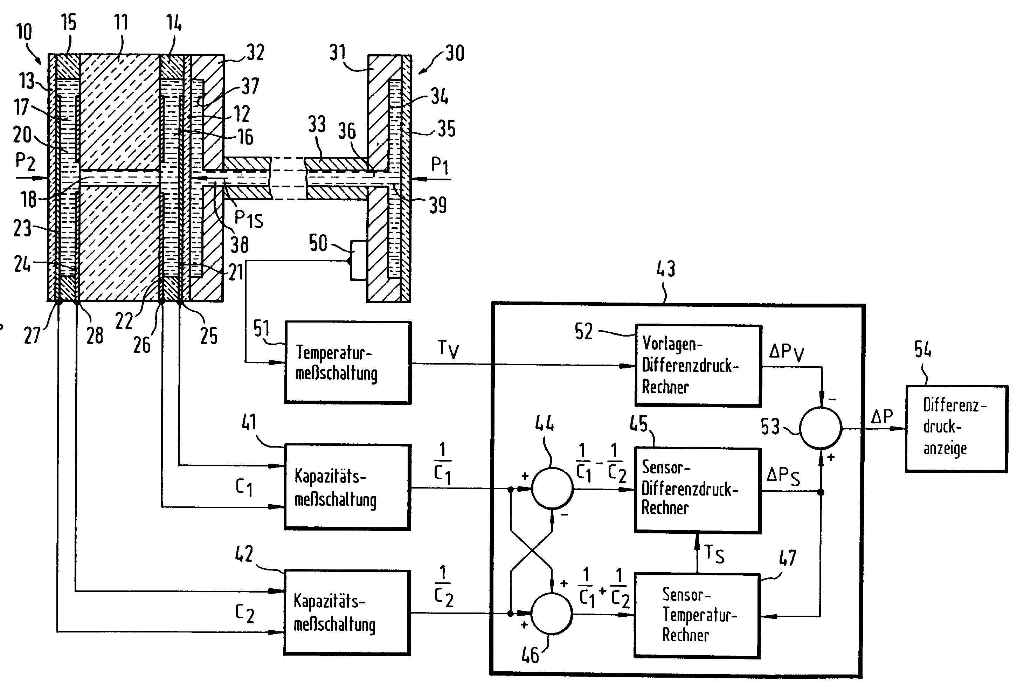

Weitere Merkmale und Vorteile der Erfindung ergeben sich aus der folgenden Beschreibung eines Ausführungsbeispiels, das schematisch in der einzigen Figur der Zeichnung dargestellt ist.

Das in der Zeichnung dargestellte Differenzdruckmeßgerät enthält einen Einkammer-Differenzdrucksensor 10 bekannter Art. Der Einkammer-Differenzdrucksensor 10 hat einen zylindrischen Grundkörper 11, an dessen beiden Stirnseiten zwei elastische Membranen 12 und 13 unter Einfügung von um den Umfang verlaufenden Distanzringen 14 bzw. 15 druckdicht befestigt sind. Der Grundkörper 11 und die Membranen 12, 13 bestehen aus einem elektrisch isolierenden Material, vorzugsweise aus einer Metalloxidkeramik. Desgleichen bestehen die Distanzringe 14 und 15 vorzugsweise aus einem elektrisch isolierenden Material, das die druckdichte Verbindung zwischen dem Grundkörper 11 und den Membranen 12 und 13 bewirkt, beispielsweise aus Glasfritte. Durch die Distanzringe 14, 15 sind die Membranen 12, 13 im Abstand vom Grundkörper 11 gehalten, so daß zwischen jeder Membran 12, 13 und der ihr zugewandten Stirnfläche des Grundkörpers 11 ein flacher Hohlraum 16 bzw. 17 besteht. Die beiden Hohlräume 16 und 17 sind durch einen im Grundkörper 11 gebildeten axialen Kanal 18 miteinander verbunden, so daß sie eine gemeinsame Kammer bilden, die druckdicht nach außen abgeschlossen ist. Das gesamte Volumen der Kammer ist mit einer inkompressiblen, isolierenden Flüssigkeit 20 gefüllt, beispielsweise mit Silikonöl.

Die dem Grundkörper 11 zugewandte Innenseite der Membran 12 ist mit einer Schichtelektrode 21 belegt, die einer ringförmigen Schichtelektrode 22 auf der ihr zugewandten Stirnfläche des Grundkörpers 11 gegenüberliegt. Desgleichen ist die Innenseite der Membran 13 mit einer Schichtelektrode 23 belegt, die einer ringförmigen Schichtelektrode 24 auf der ihr zugewandten Stirnfläche des Grundkörpers 11 gegenüberliegt. Die Schichtelektroden 21, 22, 23, 24 sind mit von außen zugänglichen Anschlußstellen 25, 26, 27, 28 verbunden, beispielsweise durch Schichtleiterstreifen, die gemeinsam mit den zugehörigen Schichtelektroden 21 bis 24 in Dickschichttechnik aufgebracht sind und zwischen den Distanzringen 14, 15 und dem Grundkörper 11 bzw. den Membranen 12, 13 zum Außenumfang verlaufen.

Die Schichtelektrode 21 bildet mit der ihr gegenüberliegenden Schichtelektrode 22 einen ersten Meßkondensator der Kapazität $C_1$, die zwischen den Anschlußstellen 25 und 26 meßbar ist, und die Schichtelektrode 23 bildet mit der ihr gegenüberliegenden Schichtelektrode 24 einen zweiten Meßkondensator der Kapazität $C_2$, die zwischen den Anschlußstellen 27 und 28 meßbar ist.

In den meisten Fällen wird ein Einkammer-Differenzdrucksensor der dargestellten Art dazu verwendet, den Differenzdruck zwischen zwei Drücken zu messen, die unmittelbar auf die beiden Membranen 12 und 13 einwirken. Wenn diese beiden Drücke ungleich sind, werden die beiden durch die inkompressible Flüssigkeit gekoppelten Membranen 12 und 13 in der Richtung des größeren Drucks ausgelenkt, wodurch sich die Abstände zwischen den Schichtelektroden 21, 22 einerseits und zwischen den Schichtelektroden 23, 24 andrerseits und damit auch die Kapazitäten $C_1$ und $C_2$ der beiden Meßkondensatoren gegensinnig ändern. Durch Messung der Kapazitäten $C_1$ und $C_2$ läßt sich daher der Differenzdruck ermitteln. In manchen Anwendungsfällen ist es jedoch unerwünscht oder sogar unmöglich, einen der beiden zu vergleichenden Drücke unmittelbar auf die zugeordnete Membran des Einkammer-Differenzdrucksensors einwirken zu lassen. Dies ist beispielsweise dann der Fall, wenn das Medium, das den Druck ausübt, die Membran zerstören würde, beispielsweise weil es chemisch aggressiv ist, oder wenn die Umgebungsbedingungen an der Druckerfassungsstelle einen Einbau des Einkammer-Differenzdrucksensors in unmittelbarem Kontakt mit dem Medium nicht zulassen.

Um die Differenzdruckmessung auch unter solchen Bedingungen zu ermöglichen, ist der Einkammer-Differenzdrucksensor 10 an der die Membran 12 tragenden Seite mit einer Vorlage 30 verbunden. Die Vorlage 30 besteht aus zwei Gehäuseschalen 31, 32, die durch ein dünnes Rohr 33 miteinander verbunden sind. Die Gehäuseschale 31 hat eine flache Ausnehmung 34, die mit einer Membran 35 abgedeckt ist, die rings um den Umfang druckdicht mit dem Rand der Gehäuseschale verbunden ist. Dadurch bildet die Ausnehmung 34 einen nach außen abgeschlossenen flachen Hohlraum, der durch eine in der Gehäuseschale 31 angebrachte zentrale Öffnung 36 mit dem Inneren des Rohres 33 in Verbindung steht. Die Gehäuseschale 32 hat eine flache Ausnehmung 37 und ist rings um den Umfang druckdicht mit dem Einkammer-Differenzdrucksensor 10 verbunden, so daß die flache Ausnehmung 37 durch die Membran 12 abgedeckt ist. Dadurch bildet die Ausnehmung 37 einen gegenüber dem Einkammer-Differenzdrucksensor 10 druckdicht abgeschlossenen flachen Hohlraum, der durch eine in der Gehäuseschale 32 angebrachte zentrale Öffnung 38 mit dem Inneren des Rohres 33 in Verbindung steht. Somit sind die beiden Hohlräume 34 und 37 durch das Rohr 33 miteinander verbunden. Das gesamte nach außen abgeschlossene Volumen der beiden flachen Hohlräume 34 und 37 sowie des Rohres 33 ist mit einer inkompressiblen Flüssigkeit 39 gefüllt, die von gleicher Art wie die im Einkammer-Differenzdrucksensor 10 enthaltene Flüssigkeit 20 sein kann, also beispielsweise Silikonöl. Die Vorlage 30 ist so ausgebildet, daß dieses Volumen möglichst klein bzw. auf den Einkammer-Differenzdrucksensor oder auf die Einsatzbedingungen optimiert ist.

Der Einbau des mit der Vorlage 30 versehenen Einkammer-Differenzdrucksensors 10 erfolgt so, daß die Membran 35 anstelle der Membran 12 mit dem Medium in Kontakt steht, dessen Druck $P_1$ mit dem auf die Membran 13 einwirkenden Druck $P_2$ verglichen werden soll. Falls dieses Medium so beschaffen ist, daß es die Membran 12 angreifen würde, wird die Membran 35 aus einem Material hergestellt, das von dem Medium nicht angegriffen wird. Wenn die Verhältnisse an der Druckerfassungsstelle von solcher Art sind, daß ein Einbau des Einkammer-Differenzdrucksensors 10 nicht möglich ist, braucht nur die Gehäuseschale 31 der Membran 35 an der Druckerfassungsstelle eingebaut zu werden, während der Einkammer-Differenzdrucksensor 10 an einer hiervon entfernten günstigen Stelle angeordnet und durch das Rohr 33, das von beträchtlicher Länge sein kann, mit der Gehäuseschale 31 verbunden wird. In jedem Fall wird der auf die Membran 35 einwirkende Druck $P_1$ durch die inkompressible Flüssigkeit 39 auf die Membran 12 übertragen, auf die dadurch ein Druck $P_{1S}$ einwirkt, der nicht notwendigerweise gleich dem Druck $P_1$ ist, wie später noch erläutert wird.

Die Funktionsweise des Einkammer-Differenzdrucksensors 10 ist bekannt. Sie beruht darauf, daß die Kapazitäten $C_1$ und $C_2$ der beiden Meßkondensatoren von dem Sensor-Differenzdruck $\Delta P_S$ abhängen, der zwischen den auf die Membranen 12 und 13 einwirkenden Drücken besteht:

$$\Delta P_S = P_{1S} - P_2 \quad (1)$$

Wenn die beiden Drücke $P_{1S}$ und $P_2$ gleich groß sind, so daß der Differenzdruck $\Delta P_S$ Null ist, befindet sich der Differenzdrucksensor 10 im Gleichgewichtszustand, in welchem die Kapazitäten $C_1$ und $C_2$ der beiden Meßkondensatoren gleich groß sind, wenn ein völlig symmetrischer Aufbau ohne Fertigungstoleranzen vorausgesetzt wird. Infolge der inkompressiblen Flüssigkeit 20, die das ganze Volumen zwischen den beiden Membranen 12 und 13 ausfüllt, können nämlich die Membranen durch die darauf einwirkenden Drücke $P_{1S}$ und $P_2$ nicht ausgelenkt werden, wenn diese Drücke gleich groß sind. Wenn jedoch beispielsweise der Druck $P_{1S}$ größer als der Druck $P_2$ wird, kann er die Membran 12 zum Grundkörper 11 hin auslenken, wobei ein Teil der inkompressiblen Flüssigkeit 20 aus dem Hohlraum 16 durch den Kanal 18 in den Hohlraum 17 verdrängt wird, so daß die Membran 13 gegen den Druck $P_2$ vom Grundkörper 11 weg nach außen ausgelenkt wird. Infolge der Auslenkung der beiden Membranen 12 und 13 wird der Abstand zwischen den Schichtelektroden 21 und 22 kleiner und der Abstand zwischen den Schichtelektroden 23 und 24 größer. Dementsprechend wird die Kapazität $C_1$ größer und die Kapazität $C_2$ kleiner. Durch Messung der beiden Kapazitäten $C_1$ und $C_2$ läßt sich daher der Sensor-Differenzdruck $\Delta P_S$ bestimmen. Wenn man Nichtlinearitäten und den Einfluß von Störgrößen vernachlässigt, ist der Differenzdruck $\Delta P_S$ näherungsweise der Differenz der reziproken Kapazitätswerte proportional:

$$\Delta P_S = k_P \cdot \left(\frac{1}{C_1} - \frac{1}{C_2}\right) \quad (2)$$

Eine wichtige Störgröße, die die Differenzdruckmessung beeinflußt, ist die Temperatur, denn die Kapazitäten $C_1$ und $C_2$ der beiden Meßkondensatoren sind außer vom Sensor-Differenzdruck $\Delta P_S$ auch von der Sensor-Temperatur $T_S$ abhängig. Bei einer Temperaturänderung ändert sich nämlich auch das Volumen der zwischen den beiden Membranen 12 und 13 eingeschlossenen Flüssigkeit 20. Wenn bei einer Temperaturzunahme das Volumen der Flüssigkeit 20 größer wird, werden die beiden Membranen 12 und 13 nach außen ausgelenkt, so daß die Abstände zwischen den Schichtelektroden 21 und 22 einerseits und zwischen den Schichtelektroden 23 und 24 andererseits gleichzeitig größer werden. Dementsprechend werden die Kapazitäten $C_1$ und $C_2$ gleichzeitig kleiner. Umgekehrt werden bei einer durch Temperaturabnahme bedingten Verkleinerung des Flüssigkeitsvolumens die Kapazitätswerte $C_1$ und $C_2$ gleichzeitig größer. Näherungsweise ist die Temperaturänderung der Summe der reziproken Kapazitätswerte proportional:

$$\Delta T_S = k_T \cdot \left(\frac{1}{C_1} + \frac{1}{C_2}\right) \quad (3)$$

Aufgrund dieser Tatsache ist es möglich, aus den gemessenen Kapazitäten $C_1$ und $C_2$ die Temperatur $T_S$ des Einkammer-Differenzdrucksensors 10 zu bestimmen und zur Korrektur der Temperaturabhängigkeit des Sensor-Differenzdrucks $\Delta P_S$ zu verwenden. Dies geschieht in der nachfolgend beschriebenen Auswerteschaltung des in der Zeichnung dargestellten Differendruckmeßgeräts.

Die Auswerteschaltung enthält eine erste Kapazitätsmeßschaltung 41, die zur Messung der Kapazität $C_1$ an die Anschlußstellen 25, 26 angeschlossen ist, und eine zweite Kapazitätsmeßschaltung 42, die zur Messung der Kapazität $C_2$ an die Anschlußstellen 27, 28 angeschlossen ist. Jede Kapazitätsmeßschaltung ist so ausgebildet, daß sie am Ausgang ein Meßsignal abgibt, das dem reziproken Wert der gemessenen Kapazität proportional ist. Somit gibt die Kapazitätsmeßschaltung 41 ein Meßsignal ab, das dem Wert $1/C_1$ proportional ist, und die Kapazitätsmeßschaltung 42 gibt ein Meßsignal ab, das dem Wert $1/C_2$ proportional ist.

Die von den beiden Kapazitätsmeßschaltungen 41 und 42 abgegebenen Meßsignale werden einer Rechenschaltung 43 zugeführt, die daraus den Sensor-Differenzdruck $\Delta P_S$ berechnet. Zur Veranschaulichung ist in der Zeichnung angedeutet, daß die Rechenschaltung 43 eine Subtrahierschaltung 44 enthält, die die Meßsignale von den beiden Kapazitätsmeßschaltungen 41 und 42 empfängt und am Ausgang ein Signal abgibt, das der Differenz $1/C_1 - 1/C_2$ der reziproken Kapazitätswerte proportional ist. Dieses Signal wird einem Sensor-Differenzdruck-Rechner 45 zugeführt.

Ferner ist angedeutet, daß die Rechenschaltung 43 eine Summierschaltung 46 enthält, die ebenfalls die Meßsignale von den beiden Kapazitätsmeßschaltungen 41 und 42 empfängt und am Ausgang ein Signal abgibt, das der Summe $1/C_1 + 1/C_2$ der reziproken Kapazitätswerte proportional ist. Dieses Signal wird einem Sensor-Temperatur-Rechner 47 zugeführt, der daraus die Sensor-Temperatur $T_S$ des Einkammer-Differenzdrucksensors 10 berechnet. Diese Temperatur $T_S$ wird ebenfalls dem Sensor-Differenzdruck-Rechner 45 mitgeteilt.

Die Berechnung der Sensor-Temperatur $T_S$ im Sensor-Temperatur-Rechner 47 und die Berechnung des Sensor-Differenzdrucks $\Delta P_S$ im Sensor-Differenzdruck-Rechner 45 erfolgt so, daß die Einflüsse der Sensor-Temperatur und der sonstigen Sensor-Parameter auf den Sensor-Differenzdruck kompensiert werden, so daß der vom Sensor-Differenzdruck-Rechner 45 berechnete Sensor-Differenzdruck $\Delta P_S$ exakt der Differenz zwischen den auf die Sensor-Membranen 12 und 13 einwirkenden Drücken $P_{1S}$ und $P_2$ entspricht. Nach einem aus der DE-PS 35 04 329 bekannten Verfahren kann dies beispielsweise dadurch geschehen, daß die Sensor-Temperatur $T_S$ und der Sensor-Differenzdruck $\Delta P_S$ nach den folgenden Beziehungen berechnet werden:

$$\frac{1}{C_1} + \frac{1}{C_2} = a + b \cdot T_S + c \cdot T_{S^2} + d \cdot \Delta P_S + e \cdot \Delta P_{S^2} \quad (4)$$

$$\frac{1}{C_1} - \frac{1}{C_2} = f + g \cdot T_S + h \cdot T_{S^2} + i \cdot \Delta P_S + k \cdot \Delta P_{S^2} + 1 \cdot \Delta P_S \cdot T_S + m \cdot \Delta P_S \cdot T_{S^2} \quad (5)$$

Hierin bedeuten:

a, f: der Nullpunktverschiebung der Meßwerte aufgrund von Fertigungstoleranzen des Einkammer-Differenzdrucksensors entsprechende Größen,

b, c: der Empfindlichkeit bei der Temperaturerfassung entsprechende Größen, die von der Volumenänderung der Füllflüssigkeit bei Temperaturänderung abhängen;

d, e: von fertigungsbedingten Asymmetrien des Sensors abhängige Größen,

g, h: der Temperaturabhängigkeit der fertigungsbedingten Nullpunktverschiebung entsprechende Größen,

i, k: von der Federkonstanten der Membranen 12 und 13 abhängige Größen, welche die Empfindlichkeit des Einkammer-Differenzdrucksensors bestimmen,

l, m: der Temperaturabhängigkeit der Federkonstanten der Membranen 12 und 13 entsprechende Größen.

Die Parameter a bis m sind auf allgemein bekannte Weise meßtechnisch ermittelbar und werden in der Rechenschaltung 43 gespeichert.

Da die Gleichungen (4) und (5) nicht nach $T_S$ und $\Delta P_S$ aufgelöst werden können, muß die Berechnung nach einem rekursiven Verfahren erfolgen. Dabei muß der jeweils berechnete Sensor-Differenzdruck $\Delta P_S$ zum Sensor-Temperatur-Rechner 47 zurückgeführt werden, wie in der Zeichnung durch eine Verbindung vom Ausgang des Sensor-Differenzdruck-Rechners 45 zu einem zweiten Eingang des Sensor-Temperatur-Rechners 47 angedeutet ist.

Wenn der Einkammer-Differenzdrucksensor 10 ohne die Vorlage 30 verwendet wird, wie es häufig der Fall ist, stellt der mit dem bisher beschriebenen Teil der Auswerteschaltung erhaltene Sensor-Differenzdruck $\Delta P_S$ bereits das gesuchte Meßergebnis dar. Wenn die Vorlage 30 vorhanden ist, würde der Sensor-Differenzdruck $\Delta P_S$ ebenfalls dem gesuchten Differenzdruck $\Delta P$ entsprechen, wenn der auf die Sensor-Membran 12 einwirkende Druck $P_{1s}$ genau gleich dem auf die Vorlagen-Membran 35 einwirkenden Druck $P_1$ wäre. Dies ist jedoch gewöhnlich nicht der Fall. Beispielsweise vergrößert sich bei einer Temperaturerhöhung das Volumen der in der Vorlage 30 eingeschlossenen inkompressiblen Flüssigkeit 39, wodurch ein zusätzlicher Druck in der Vorlage entsteht, um den der Druck $P_{1s}$ größer als der Druck $P_1$ ist. Der Vorlagen-Differenzdruck

$$\Delta P_V = P_{1s} - P_1 \quad (6)$$

hängt in erster Linie von der Vorlagentemperatur $T_S$ sowie von konstruktiv bedingten Parametern der Vorlage 30 ab.

Die in der Zeichnung dargestellte Auswerteschaltung ist daher zusätzlich so ausgebildet, daß der Einfluß der Vorlagen-Temperatur und anderer Vorlagen-Parameter auf den zu messenden Differenzdruck $\Delta P$ beseitigt wird.

An der Vorlage 30 ist ein Temperatursensor 50 so angebracht, daß die von ihm gemessene Temperatur im wesentlichen der Temperatur der in der Vorlage enthaltenen inkompressiblen Flüssigkeit 39 entspricht. Der Temperatursensor 50 kann ein beliebiger, an sich bekannter Temperatursensor sein, beispielsweise ein temperaturabhängiger Widerstand des Typs PT 100. Falls erforderlich, können auch mehrere Temperatursensoren nach Art des Temperatursensors 50 an der Vorlage angebracht werden.

Mit dem Temperatursensor 50 ist eine Temperaturmeßschaltung 51 verbunden, die am Ausgang ein Meßsignal abgibt, das der vom Temperatursensor 50 detektierten Vorlagen-Temperatur $T_V$ entspricht. Dieses Meßsignal wird einem in der Rechenschaltung 43 enthaltenen Vorlagen-Differenzdruck-Rechner 52 zugeführt, der den Vorlagen-Differenzdruck $\Delta P_V$ beispielsweise nach der folgenden Beziehung berechnet:

$$\Delta P_V = p + q \cdot T_V \quad (7)$$

Darin sind p und q Parameter der Vorlage, die in ähnlicher Weise wie die Parameter a bis m des Einkammer-Differenzdrucksensors 10 meßtechnisch erfaßt und in der Rechenschaltung 43 gespeichert werden. Zu diesen Parametern gehört insbesondere der Wärmeausdehnungskoeffizient der in der Vorlage enthaltenen inkompressiblen Flüssigkeit.

Der vom Vorlagen-Differenzdruck-Rechner 52 berechnete Vorlagen-Differenzdruck $\Delta P_V$ wird einer Subtrahierschaltung 53 zugeführt, die außerdem den vom Sensor-Differenzdruck-Rechner 45 berechneten Sensor-Differenzdruck $\Delta P_S$ empfängt und am Ausgang ein Signal abgibt, das der Differenz zwischen den beiden Eingangswerten entspricht:

$$\Delta P = \Delta P_S - \Delta P_V \quad (8)$$

Dieses Signal entspricht genau dem zu messenden Differenzdruck $\Delta P$ zwischen dem auf die Vorlagen-Membran 35 einwirkenden Druck $P_1$ und dem auf die Sensor-Membran 13 einwirkenden Druck $P_2$, wobei alle Temperatureinflüsse in der Vorlage und im Sensor sowie die Einflüsse konstruktiv bedingter Parameter der Vorlage und des Sensors kompensiert sind. Der Differenzdruck $\Delta P$ kann in einer an den Ausgang der Subtrahierschaltung 53 angeschlossenen Differenzdruckanzeige 54 angezeigt werden.

Es ist zu erkennen, daß die Kompensation in der Rechenschaltung 43 in zwei Stufen erfolgt. Der Sensor-Temperatur-Rechner 47 und der Sensor-Differenzdruck-Rechner 45 bilden eine erste Kompensationsanordnung, die die Einflüsse der Sensor-Temperatur und der Sensor-Parameter kompensiert. Diese erste Kompensationsanordnung entspricht dem Stand der Technik bei Einkammer-Differenzdrucksensoren, die ohne Vorlage verwendet werden. Zu dieser ersten Kompensationsanordnung ist eine zweite Kompensationsanordnung hinzugefügt, die durch den Vorlagen-Differenzdruck-Rechner 52 und die Subtrahierschaltung 53 gebildet ist. Diese zweite Kompensationsanordnung kompensiert die zusätzlichen Einflüsse der Vorlagen-Temperatur und der Vorlagen-Parameter auf den mit Hilfe der ersten Kompensationsanordnung berechneten Sensor-Differenzdruck.

Die Unterteilung der Kompensation in zwei Stufen ergibt den wesentlichen Vorteil, daß die erste Kompensation der herkömmlichen Kompensation eines Einkammer-Differenzdrucksensors entspricht und in keiner Weise davon abhängig ist, ob zusätzlich eine Vorlage verwendet wird oder nicht. Die für die erste Kompensation erforderlichen Parameter können daher für den Einkammer-Differenzdrucksensor erfaßt und in der Rechenschaltung 43 abgespeichert werden, ohne daß berücksichtigt werden muß, ob später eine Vorlage hinzugefügt wird und wie diese Vorlage beschaffen ist und eingebaut wird. Die für die zweite Kompensation erforderlichen Parameter, die je nach der Art der verwendeten Vorlage und den Einbaubedingungen verschieden

EP 0 421 394 B1

sein können, werden von Fall zu Fall getrennt erfaßt und in der Rechenschaltung 43 gespeichert.

Die Rechenschaltung 43 kann in beliebiger, an sich bekannter Weise ausgebildet sein, beispielsweise mit bekannten Analog- oder Digitalschaltungen. Vorzugsweise ist die Rechenschaltung durch einen geeignet programmierten Mikroprozessor gebildet. Falls die von den Kapazitätsmeßschaltungen 41 und 42 gelieferten Meßsignale nicht in einer Form vorliegen, die für die Verarbeitung durch einen Mikroprozessor unmittelbar geeignet ist, müssen natürlich die erforderlichen Analog-Digital-Wandler oder Schnittstellen eingefügt werden, wie dies dem Fachmann geläufig ist.

Der Temperatursensor 50 und die Temperaturmeßschaltung 51 können entfallen, wenn sichergestellt ist, daß die Vorlagen-Temperatur $T_V$ immer genau gleich der Sensor-Temperatur $T_S$ ist. In diesem Fall wird die vom Sensor-Temperatur-Rechner 47 berechnete Sensor-Temperatur $T_S$ auch dem Vorlagen-Differenzdruck-Rechner 52 zugeführt. In der überwiegenden Zahl der Fälle ist diese Voraussetzung jedoch nicht erfüllt, so daß es vorzuziehen ist, die Vorlagentemperatur $T_V$ getrennt zu erfassen.

In manchen Anwendungsfällen kann es erforderlich sein, auf der anderen Seite des Einkammer-Differenzdrucksensors 10 eine zweite Vorlage nach Art der Vorlage 30 anzubringen, beispielsweise um auch die Membran 13 vor der Einwirkung eines chemisch aggressiven Mediums zu schützen. Der zu messende Differenzdruck entspricht dann der Differenz zwischen den Drücken, die auf die beiden Vorlagen-Membranen einwirken. Das zuvor beschriebene Differenzdruckmeßgerät läßt sich ohne weiteres auf diesen Fall erweitern: In der Rechenschaltung 43 wird ein zweiter Vorlagen-Differenzdruck-Rechner vorgesehen, der den Vorlagen-Differenzdruck der zweiten Vorlage in der beschriebenen Weise berechnet, und in der Subtrahierschaltung 53 wird die Summe der beiden Vorlagen-Differenzdrücke vom Sensor-Differenzdruck abgezogen. Die Vorlagen-Temperatur der zweiten Vorlage kann wiederum mit Hilfe von einem oder mehreren Temperatursensoren und einer zugeordneten Temperaturmeßschaltung ermittelt werden.

**Patentansprüche**

1.  Differenzdruckmeßgerät mit einem Einkammer-Differenzdrucksensor (10), der zwei elastische Sensor-Membranen (12, 13) enthält, die ein mit einer Flüssigkeit (20) gefülltes Volumen abschließen, und in dem zwei Meßkondensatoren (21, 22; 23, 24) gebildet sind, deren Kapazitäten ($C_1$, $C_2$) sich in Abhängigkeit von dem Sensor-Differenzdruck, der zwischen den auf die beiden Sensor-Membranen (12, 13) einwirkenden Drücken besteht, gegensinnig ändern, und mit einer Auswerteschaltung (41, 42, 43), welche den Sensor-Differenzdruck aus den Kapazitäten ($C_1$, $C_4$) der Meßkondensatoren (21, 22; 23, 24) berechnet und eine erste Kompensationsanordnung (46, 47) enthält, welche Einflüsse der Sensor-Temperatur und von Sensor-Parametern auf den berechneten Sensor-Differenzdruck kompensiert, wobei der Einkammer-Differenzdrucksensor (10) mit wenigstens einer Vorlage (30) verbunden ist, die ein von der Außenseite einer der beiden Sensor-Membranen (12, 13) und von der Innenseite einer Vorlagen-Membran (35) begrenztes Volumen enthält, das mit einer Flüssigkeit (39) gefüllt ist, über die der unmittelbar auf die Außenseite der Vorlagen-Membran (35) einwirkende Druck auf die zugehörige Sensor-Membran (12) übertragen wird, dadurch gekennzeichnet, daß an der bzw. an jeder Vorlage (30) wenigstens ein Temperatursensor (50) zur Messung der Vorlagen-Temperatur angebracht ist, und daß in der Auswerteschaltung für die bzw. für jede Vorlage (30) eine weitere Kompensationsanordnung vorgesehen ist, die einen Vorlagen-Differenzdruck-Rechner (52) enthält, der den Vorlagen-Differenzdruck, welcher durch die Drücke bestimmt ist, die auf eine Vorlagen-Membran (35) und auf die zugehörige Sensor-Membran (12) einwirken, aufgrund der Vorlagen-Temperatur und von gespeicherten Vorlagen-Parametern berechnet, sowie eine Subtrahierschaltung (53), welche die Differenz zwischen dem von der ersten Kompensationsanordnung korrigierten Sensor-Differenzdruck und dem berechneten Vorlagen-Differenzdruck bildet und als Meßergebnis ausgibt.

2.  Differenzdruckmeßgerät nach Anspruch 1, dadurch gekennzeichnet, daß der bzw. jeder Temperatursensor (50) mit einer Temperaturmeßschaltung (51) verbunden ist, die ein die Vorlagen-Temperatur darstellendes Meßsignal zu dem Vorlagen-Differenzdruck-Rechner (52) liefert.

**Claims**

1.  Differential pressure measuring apparatus comprising a single chamber differential pressure sensor (10) which comprises two resilient sensor diaphragms (12, 13) enclosing a volume filled with a fluid (20) and in which two measuring capacitors (21, 22; 23, 24) are formed whose capacitances ($C_1$, $C_2$) vary in op-

7

posite senses as a function of the sensor differential pressure existing between the pressures acting on the two sensor diaphragms (12, 13), and further comprising an evaluation circuit (41, 42, 43) which calculates the sensor differential pressure from the capacitances ($C_1$, $C_2$) of the measuring capacitors (21, 22; 23, 24) and comprises a first compensation arrangement (46, 47) which compensates influences of the sensor temperature and of sensor parameters on the calculated sensor differential pressure, the single chamber differential pressure sensor (10) being connected with at least one adapter (30) comprising a volume which is delimited by the outer face of one of the two sensor diaphragms (12, 13) and by the inner face of an adapter diaphragm (35), said volume being filled with a fluid (39) through which the pressure acting directly on the outer face of the adapter diaphragm (35) is transmitted to the associated sensor diaphragm (12), characterized in that at least one temperature sensor (50) is affixed to the or each adapter (30) for measuring the adapter temperature, and in that in the evaluation circuit a further compensation arrangement is provided for the or each adapter (30), which further compensation arrangement comprises an adapter differential pressure calculator (52) which calculates from the adapter temperature and from stored adapter parameters the adapter differential pressure determined by the pressures acting on an adapter diaphragm (35) and the associated sensor diaphragm (12), and a subtracting circuit (53) which forms the difference between the sensor differential pressure corrected by the first compensation arrangement and the calculated adapter differential pressure and delivers this difference as the measurement result.

2. Differential pressure measuring apparatus according to claim 1, characterized in that the or each temperature sensor (50) is connected to a temperature measuring circuit (51) which delivers to the adapter differential pressure calculator (52) a measurement signal representative of the adapter temperature.

## Revendications

1. Appareil de mesure de pression différentielle équipé d'un capteur de pression différentielle à chambre unique (10) qui contient deux membranes de capteur (12, 13) élastiques qui séparent un volume rempli d'un liquide (20), et dans lequel sont formés deux condensateurs de mesure (21, 22 ; 23, 24) dont les capacités ($C_1$, $C_2$) changent en sens inverse en fonction de la pression différentielle sur le capteur qui existe entre les pressions agissant sur les deux membranes de capteur (12, 13), et équipé d'un circuit d'analyse (41, 42, 43) qui calcule la pression différentielle sur le capteur à partir des capacités ($C_1$, $C_4$) des condensateurs de mesure (21, 22 ; 23, 24) et contient un premier dispositif de compensation (46, 47) qui compense des influences de la température du capteur et des paramètres du capteur sur la pression différentielle calculée sur le capteur, le capteur pour pression différentielle à chambre unique (10) étant relié à au moins un récipient collecteur (30) qui contient un volume délimité par le côté extérieur de l'une des deux membranes de capteur (12, 13) et par le côté intérieur d'une membrane (35) du récipient collecteur, volume rempli d'un liquide (39) par lequel la pression agissant directement sur le côté extérieur de la membrane (35) du récipient collecteur est transmise à la membrane (12) de capteur correspondante, caractérisé en ce qu'au moins un capteur de température (50) est disposé sur le ou chaque récipient collecteur (30) pour la mesure de la température du récipient, et en ce que, dans le circuit d'analyse, il est prévu un autre dispositif de compensation pour le ou chaque récipient collecteur qui contient un calculateur de pression différentielle (52) du récipient collecteur qui, sur la base de la température du récipient collecteur et des paramètres stockés de celui-ci, calcule la pression différentielle dans le - réservoir collecteur déterminée par les pressions qui agissent sur une membrane (35) du récipient collecteur et sur la membrane (12) de capteur correspondante, et un circuit de soustraction qui fait la différence entre la pression différentielle sur le capteur corrigée par le premier dispositif de compensation et la pression différentielle calculée dans le récipient collecteur et sort cette différence comme résultat de mesure.

2. Appareil de mesure de pression différentielle selon la revendication 1, caractérisé en ce que le ou chaque capteur de température (50) est relié à un circuit de mesure de température (51) qui fournit un signal de mesure représentant la température dans le récipient collecteur au calculateur (52) de pression différentielle dans le récipient collecteur.

9